Europäisches Patentamt

European Patent Office

Office européen des brevets

(11) Veröffentlichungsnummer: **0 361 226**
**A2**

## EUROPÄISCHE PATENTANMELDUNG

(21) Anmeldenummer: **89117087.0**

(22) Anmeldetag: **15.09.89**

(51) Int. Cl.5 **F02P 5/15**

(30) Priorität: **26.09.88 DE 3832629**

(43) Veröffentlichungstag der Anmeldung:
**04.04.90 Patentblatt 90/14**

(84) Benannte Vertragsstaaten:
**DE FR GB IT SE**

(71) Anmelder: **Daimler-Benz Aktiengesellschaft**
**Postfach 600202 Mercedesstrasse 136**
**D-7000 Stuttgart 60(DE)**

(72) Erfinder: **Schenk, Jürgen**
**Wolfhaldenweg 22/3**
**D-7321 Albershausen(DE)**

(54) **Verfahren zur dynamischen Korrektur des Zündzeitpunktes einer Brennkraftmaschine.**

(57) Bei einer Kennfeldzündung einer Brennkraftmaschine soll auch bei plötzlichem Wechsel von Last oder Drehzahl ein Klopfen vermieden werden. Dazu wird auf den ermittelten Kennfeldzundzeitpunkt ein Korrekturwert in Richtung "spät" aufgeschaltet, dessen Betrag sowohl von der Ansauglufttemperatur, als auch von der Motordrehzahl abhängig ist. Nach erfolgter Spätverstellung wird der Korrekturwert innerhalb einer wählbaren Zeit so weit in Richtung "früh" verstellt, bis der momentan gültige Kennfeldzündzeitpunkt wieder erreicht ist.

EP 0 361 226 A2

# Verfahren zur dynamischen Korrektur des Zündzeitpunktes einer Brennkraftmaschine

Die Erfindung betrifft ein Verfahren zur dynamischen Korrektur eines Zündzeitpunktes nach dem Oberbegriff des Patentanspruches 1.

Bei Brennkraftmaschinen mit elektronischer Zündung ist es üblich, den Zündzeitpunkt in einem Kennfeld über der Last und der Motordrehzahl abzulegen. Auf diese Weise wird aus dem Kennfeld ein zur jeweiligen Motordrehzahl und zur Last gehöriger, z.B. für Abgas- und Verbrauchswerte optimierter, Zündzeitpunkt entnommen. So wird z.B. für den Leerlaufbetrieb ein "früher" Zündzeitpunkt gewählt, der durch eine Erhöhung des Drehmomentes den Leerlauf stabilisiert, während für den Vollastbetrieb ein Zündzeitpunkt gewählt wird, der die Klopfgrenze berücksichtigt.

Derartige Verfahren sind zwar für das stationäre Verhalten von Brennkraftmaschinen geeignet, weisen jedoch den Nachteil auf, daß sie dynamische Vorgänge an der Brennkraftmaschine, wie z.B. Last- und Drehzahländerungen, nicht ausreichend berücksichtigen.

Aufgabe der Erfindung ist es, aus dem Kennfeld ermittelte Zündzeitpunkte derartig zu korrigieren, daß für den dynamischen Betrieb der Brennkraftmaschine optimierte Zündzeitpunkte zur Verfügung stehen.

Die Aufgabe wird erfindungsgemäß durch die im kennzeichnenden Teil des Hauptanspruchs angegebenen Merkmale gelöst. Weitere Vorteile der Erfindung gehen aus den Unteransprüchen und der Beschreibung hervor.

Durch einen Sprung des Saugrohrdrucks wird eine plötzliche Änderung im Betrieb der Brennkraftmaschine, d.h. eine Laständerung oder eine Drehzahländerung, erkannt. Eine derartige Änderung kann zum Klopfen führen, insbesondere beim Wechsel auf Vollast und bei hohen Ansauglufttemperaturen. Zwar wird in diesem Fall der Zündzeitpunkt über das Kennfeld an diesen Betriebszustand angepaßt, jedoch kann es wegen des plötzlichen Lastwechsels unter ungünstigen Bedingungen dennoch zum Klopfen kommen. Um ein Klopfen in jedem Falle zu vermeiden, wird auf den momentan gültigen Kennfeldzündzeitpunkt ein Korrektur-Zündzeitpunkt in Richtung "spät" aufgeschaltet. Dieser Korrekturwert ist so gewählt, daß ein Klopfen mit Sicherheit ausgeschlossen ist. Der Betrag des Korrekturwertes ist dabei eine Funktion der Ansauglufttemperatur und der Motordrehzahl. Im Anschluß an diese Spätverstellung des Zündzeitpunktes wird der Korrekturwert innerhalb einer frei wählbaren Zeit soweit in Richtung "früh" zurückgenommen, bis der gültige Kennfeldzündzeitpunkt erreicht ist.

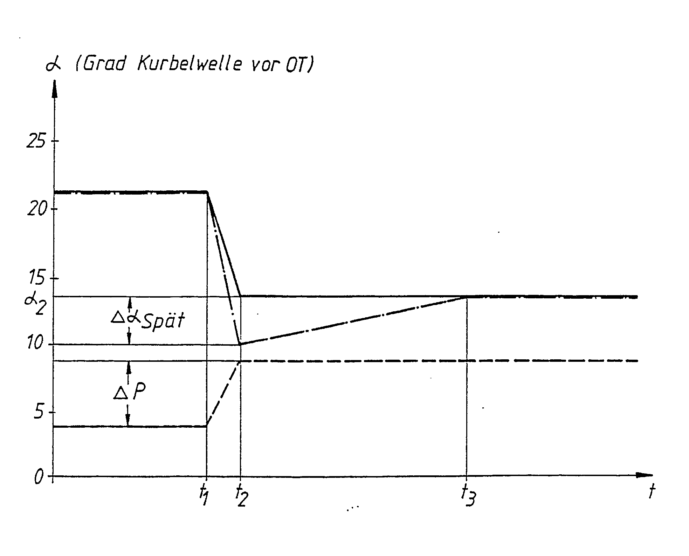

Das Verfahren sei anhand der Zeichnung beschrieben.

In dem Diagramm ist über der Zeitachse in der Ordinate der Zündzeitpunkt $\alpha$ vor dem oberen Totpunkt (OT) der Kurbelwelle in Grad aufgetragen.

Es sei angenommen, daß der gestrichelt eingezeichnete Saugrohrdruck, der in diesem Diagramm ebenfalls, jedoch ohne eine Größenangabe dargestellt ist, zum Zeitpunkt $t_1$ plötzlich ansteige. Ohne eine dynamische Korrektur ändert sich der Zündzeitpunkt nach den im Kennfeld abgelegten Werten, wie es mit der durchgezogenen Linie angedeutet ist, d.h. er wird um einen bestimmten Betrag in Richtung "spät" verstellt. Die plötzliche Änderung der Motorbetriebsweise könnte jedoch trotz der Spätverstellung zum Klopfen führen.

Nach dem erfindungsgemäßen Verfahren wird bei Überschreiten einer bestimmten Saugrohrdruckänderung $\Delta p$ innerhalb einer frei wählbaren Zeit $t_2-t_1$ auf den für den Zeitpunkt $t_2$ ermittelten Kennfeldzündzeitpunkt $\alpha_2$ ein Korrekturwert $\Delta \alpha_{Spät}$ in Richtung Spätverstellung der Zündung aufgeschaltet, der in jedem Falle eine klopfende Verbrennung verhindert. Dieser Korrekturwert $\Delta \alpha_{Spät}$ ist eine Funktion der Zeit t und abhängig von der Ansaugluft temperatur $\nu_{Luft}$ sowie von der Drehzahl n. Da bei höherer Lufttemperatur die Klopfneigung zunimmt, steigt $\Delta\alpha_{Spät}$ mit höherer Lufttemperatur $\nu_{Luft}$ an. Umgekehrt nimmt $\Delta\alpha_{Spät}$ mit höherer Drehzahl n ab, da angenommen werden kann, daß eine hohe Drehzahl auch eine bessere Kühlung, d.h. Senkung der Ansauglufttemperatur $\nu_{Luft}$ bewirkt. Außerdem kann durch eine mit steigender Drehzahl n abnehmende Bewertung von $\nu_{Luft}$ die elektronische Steuereinheit, die durch den vermehrten Rechenaufwand bei höheren Drehzahlen an ihre Laufzeitgrenzen stoßen kann, entlastet werden. So kann z.B. vorgesehen werden, daß ab einer Drehzahl von ca. 4000-5000 Umdrehungen pro Minute keine Beeinflußung von $\alpha_{Spät}$ mehr erfolgt. Nachdem der Zündzeitpunkt auf diese Weise in Richtung "spät" korrigiert wurde, wird er mit einer wählbaren Steigung, d.h. innerhalb einer wählbaren Zeit, in Richtung "früh" verstellt, bis zum Zeitpunkt $t_3$ der momentan gültige Kennfeldzündzeitpunkt $\alpha_2$ für den Betrieb der Brennkraftmaschine erreicht ist, das bedeutet bis $\Delta\alpha_{Spät} = 0$ ist. Der gesamte Korrekturvorgang läßt sich demnach in der folgenden Gleichung zusammenfassen:

$$\Delta\alpha_{Spät}(t) = f(\nu_{Luft})^* f(n)^* ( 1 - (\Delta \alpha_{Früh}^* t)/\Delta t ).$$

$(\Delta\alpha_{Früh}^* t)/\Delta t$ bestimmt also die Weise, in der die Spätverstellung $\Delta\alpha_{Spät}(t)$ wieder rückgängig gemacht wird. Der gültige Kennfeldzündzeitpunkt ist dann erreicht, wenn $\Delta\alpha_{Spät} = 0$ ist bzw. $(\Delta\alpha_{Früh}^* t)/\Delta t = 1$ ist. Dieser erfindungsgemäße Verlauf des Zündzeitpunktes mit dynamischer Korrektur ist strichpunktiert dargestellt.

**Ansprüche**

1. Verfahren zur dynamischen Korrektur des Zündzeitpunktes einer Brennkraftmaschine mit Kennfeldzündung in Abhängigkeit von Saugrohrdruck, Ansauglufttemperatur und Motordrehzahl,
**dadurch gekennzeichnet,**
daß bei Überschreiten einer wählbaren Saugrohrdruckänderung ($\Delta p$) innerhalb einer wählbaren Zeit ($t_2$-$t_1$) auf den momentan gültigen Kennfeldzündzeitpunkt ($\alpha_2$) ein in Richtung "spät" wirkender Korrektur-Zündzeitpunkt ($\Delta\alpha_{\text{Spät}}$) aufgeschaltet wird und
daß anschließend der Korrektur-Zündzeitpunkt ($\Delta\alpha_{\text{Spät}}$) innerhalb einer frei wählbaren Zeit in Richtung "früh" auf den gültigen Kennfeldzündzeitpunkt ($\alpha_2$) verstellt wird.

2. Verfahren nach Anspruch 1,
**dadurch gekennzeichnet,**
daß der Korrektur-Zündzeitpunkt ($\Delta\alpha_{\text{Spät}}$) eine Funktion der Ansauglufttemperatur ($\nu_{\text{Luft}}$) ist.

3. Verfahren nach Anspruch 1 oder 2,
**dadurch gekennzeichnet,**
daß der Korrektur-Zündzeitpunkt ($\Delta\alpha_{\text{Spät}}$) eine Funktion der Motordrehzahl (n) ist.

Daim 18340/E

α (Grad Kurbelwelle vor OT)

25

20

15
α₂

Δα Spät

10

ΔP

5

0

t₁  t₂          t₃          t